# EUROPÄISCHE PATENTANMELDUNG

(11) **EP 1 798 620 A1**
(43) Veröffentlichungstag der Anmeldung: **20.06.2007**
(21) Anmeldenummer: 06121823.6
(22) Anmeldetag: 05.10.2006
(51) Int. Cl.: G05B 23/02

(54) **System und Verfahren zur Fernanalyse, Fernwartung und/oder Fehlerbehebung eines technischen Gerätes**

(30) Priorität: 15.12.2005 DE 102005060049
(71) Anmelder: SIEMENS AKTIENGESELLSCHAFT, 80333 München (DE)
(72) Erfinder: Diezel, Matthias, 90482, Nürnberg (DE); Kiesel, Bruno, 91058, Erlangen (DE); Winter, Robert, 92355, Velburg (DE)

(57) **Zusammenfassung**

Die Erfindung betrifft ein System und ein Verfahren zur Fernanalyse, Fernwartung und/oder Fehlerbehebung eines technischen Geräts (6), wobei das System eine mobile Vorrichtung (4) aufweist, die im Bedarfsfall mit dem technischen Gerät (6) und mit einem Datennetz (3) verbindbar ist. Ein Computer (2) und/oder ein Experte (1) führen eine Fernanalyse durch und geben Anweisungssequenzen an die mobile Vorrichtung bzw. an das technische Gerät durch. Ziel ist es, eine sichere und kosteneffiziente Fernanalyse, Fernwartung und/oder Fehlerbehebung durchzuführen. Aus Gründen der Sicherheit wird die mobile Vorrichtung (4) lediglich im Bedarfsfall temporär mit dem technischen Gerät (6) verbunden, um über ein Datennetz mit dem Experten (1) bzw. mit dem Computer (2) zu kommunizieren. Durch den Computer (2) und/oder den Experten (1) wird mindestens eine auf der Fernanalyse basierende, zur Wartung und/oder Fehlerbehebung vorgesehene Anweisungssequenz für das technische Gerät (6) über das Datennetz bereitgestellt.

## Beschreibung

Die Erfindung betrifft ein System und ein Verfahren zur Fernanalyse, Fernwartung und/oder Fehlerbehebung eines technischen Gerätes, wobei das System eine mobile Vorrichtung aufweist, die im Bedarfsfall mit dem technischen Gerät und mit einem Datennetz verbindbar ist und Mittel zur Kommunikation zwischen dem technischen Gerät und mindestens einem Teilnehmer des Datennetzes aufweist, wobei der Teilnehmer Mittel zur Fernanalyse, Fernwartung und/oder Fehlerbehebung des technischen Gerätes aufweist.

Technische Geräte, wie z. B. Automatisierungsgeräte, technische Anlagen, industrielle Anlagensteuerungen, Fahrzeuge, oder automatisierte Maschinen werden in aller Regel durch Servicetechniker oder/und unter der Anleitung von Experten gewartet. Wartungsmaßnahmen können dabei sowohl das Beheben von technischen Fehlern als auch das Verändern der Funktionalität umfassen. Für unterschiedliche Wartungsmaßnahmen oder Fehlerbehebungen kommen dabei häufig verschiedene Servicetechniker bzw. Experten zum Einsatz. Die Wartungstechniker bzw. Experten sind in aller Regel auf unterschiedliche technische Einrichtungen sowie auf unterschiedliche Komponenten dieser Einrichtungen spezialisiert. Das gleiche gilt entsprechend für das Werkzeug, bzw. Wartungs- und Analysewerkzeug dieser Personen.

Der hohe Spezialisierungsgrad macht die Wahl des jeweils geeigneten Wartungstechnikers bzw. Experten von der jeweiligen Einrichtung und von der jeweils erforderlichen Wartungsmaßnahme abhängig. Um Wartungsmaßnahmen schnell und flexibel durchführen zu können, setzen sich deshalb im zunehmenden Maße Fernanalysesysteme durch, die Wartungsmaßnahmen über Datenfernverbindungen möglich machen.

Die Fernwartung von technischen Einrichtungen und Geräten bringt jedoch Probleme für die Sicherheit elektronischer Daten oder der technischen Einrichtungen und Geräte selbst mit sich. Zunächst muss eine Datenfernverbindung, die von einem Servicetechniker zu einer zu analysierenden bzw. zu wartenden Einrichtung aufgebaut wird, gegen unerlaubten Zugriff von Dritten geschützt werden. Zu diesem Zweck greift man standardmäßig auf verschlüsselte Datenverbindungen, nicht öffentliche Datenleitungen oder passwortgeschützten Datenverkehr zurück. In diesem Zusammenhang wird der Aufbau einer Datenfernverbindung von einem technischen Gerät nur dann zugelassen, wenn eine erfolgreiche elektronische Identifizierung des Verbindungspartners durchgeführt wurde. Dennoch finden sich in der Praxis Mittel und Wege für Unbefugte diese Sicherheitsmaßnahmen zu umgehen. Zudem gestaltet sich die Entdeckung und Nachvollziehbarkeit einer nichtautorisierten Nutzung als sehr schwierig.

Beim derzeitigen Stand der Technik werden technische Geräte mit einer festen, stationären Kommunikationseinrichtung versehen oder haben über ein internes Netz Zugang zu einer solchen Einrichtung. Die feste stationäre Kommunikationseinrichtung hat zur Folge, dass hohe Hardware- und Softwarekosten, insbesondere wegen der Materialbindung, anfallen, und ein latentes Sicherheitsrisiko gegen Angriffe von außen besteht.

Andererseits impliziert die Abkoppelung des technischen Gerätes von Datenübertragungseinrichtungen den Nachteil, dass Experten mit dem entsprechenden Wartungsgerät aufwendigerweise das technische Gerät aufsuchen müssen, wenn eine Wartung oder eine Fehlerbehebung ansteht. Diese Bindung von qualifiziertem Personal und Wartungsgerät ist ebenfalls teuer und zeitaufwendig.

Aus DE 103 13 271 A1 ist ein Verfahren zur Fernwartung einer technischen Einrichtung durch einen Wartungstechniker mittels eines Wartungsrechners sowie ein computerlesbares Speichermedium, auf dem Informationen zur Ausführung des Verfahrens auf einer Datenverarbeitungseinrichtung gespeichert sind, bekannt. Der Ansatz dieses Verfahrens liegt in der Verwendung einer festen Datenübertragungseinrichtung bei gleichzeitiger Verwendung einer Kennung als Sicherheitsmaßnahme. Bei dem bekannten Verfahren wird
a) in einem Schritt eine Datenfernverbindung zwischen dem Wartungsrechner und der technischen Einrichtung aufgebaut,
b) in einem Schritt von dem Wartungsrechner eine von einem Umfang eines beabsichtigten Zugriffs auf in der technischen Einrichtung gespeicherte Daten abhängige elektronische Zugriffs-Information an die technische Einrichtung übermittelt,
c) in einem Schritt von dem Wartungsrechner eine den Wartungstechniker identifizierende elektronische Kennung an die technische Einrichtung übermittelt,
d) in einem Schritt durch die technische Einrichtung in Abhängigkeit von der Zugriffs-Information und der Kennung eine Zustimmung einer Bedienperson zu einem Zugriff ermittelt und
e) in einem Schritt von der technischen Einrichtung eine von der Ermittlung der Zustimmung abhängige elektronische Bestätigungs-Information erzeugt.

Die Aufgabe der Erfindung besteht darin, ein Verfahren und ein System zur sicheren und kostengünstigen Fernanalyse, Fernwartung und/oder Fehlerbehebung eines technischen Gerätes anzugeben.

Die Erfindung löst diese Aufgabe durch ein System der eingangs genannten Art, wobei eine mobile Vorrichtung Mittel zur Kontrolle eines Zugriffs aus dem Datennetz aufweist, und durch einen Teilnehmer mindestens eine, auf einer Fernanalyse basierende, zur Wartung und/oder Fehlerbehebung vorgesehene Anweisungssequenz für das technische Gerät über das Datennetz bereitstellbar ist. Ein entsprechendes Verfahren ist ebenfalls zur Lösung der Aufgabe angegeben.

Erfindungsgemäß soll im Gegensatz zu heutigen Lösungen mobile Vorrichtungen, insbesondere der Kommunikation (z.B. Mobiltelefone), für eine temporäre Datenverbindung eines fest installierten technischen Gerätes genutzt werden. Diese temporäre Anbindung wird in Bedarfsfall hergestellt. Hierdurch wird das Sicherheitsrisiko einer festen stationären Kommunikationsvorrichtung ausgeschlossen. Die Kommunikation zwischen einer mobilen Vorrichtung, die insbesondere als ein alltägliches elektronisches Gerät (Mobiltelefon, etc.) ausgeführt sein kann, und dem technischen Gerät erfolgt entweder drahtgebunden oder drahtlos. Das Gleiche gilt für die Kommunikation der mobilen Vorrichtung mit dem Datennetz. Die drahtlose Kommunikation ist den gegebenen Umständen anpassbar und unterstreicht die Einfachheit der temporären Anbindung des technischen Gerätes an ein Datennetz, wie z.B. das Internet. Des Weiteren sind auch Datennetze, die die technischen Möglichkeiten für einen Fernzugriff ermöglichen, wie z.B. Netze, die auf einem Standard, wie z.B. dem Universal Mobile Telecommunication System (UMTS) Standard, Global Standard for Mobile Communications (GSM), General Packet Radio Service (GPRS) oder einem ähnlichen Standard basieren, zur Verwendung geeignet.

Eine vorteilhafte Sicherheitseinrichtung existiert dadurch, dass für die mobile Vorrichtung Mittel zur lokalen Kontrolle eines Zugriffs aus dem Datennetz vorgesehen sind. Dies bedeutet, dass durch den Bediener oder Servicetechniker eine Kontrolle mittels der mobilen Vorrichtung jederzeit gewährleistet ist. Durch den Teilnehmer, der beispielsweise ein Experte und/oder ein Computer sein kann, ist mindestens eine, auf der Fernanalyse basierende, zur Wartung und/oder Fehlerbehebung vorgesehene Anweisungssequenz für das technische Gerät über das Datennetz bereitstellbar. Erfindungsgemäß findet über das Datennetz eine Fernanalyse des technischen Gerätes statt. Der Teilnehmer, der als Experte und/oder Computer ausgeführt sein kann, weist Analysefunktionen bezüglich des technischen Gerätes auf und ist in der Lage intelligente Serviceanleitungen in Form von Anweisungssequenzen zu geben. Die Anweisungssequenzen können durch den Teilnehmer selbsttätig oder auch in Zusammenarbeit der Teilnehmer untereinander generiert werden. Es ist von besonderem Vorteil, wenn der Computer als Server ausgeführt ist und somit auch dann im Datennetz verfügbar ist, wenn der Experte nicht erreichbar ist. Sind beide verfügbar, ist es beispielsweise möglich, dass der Experte einen Algorithmus aus vom Computer vorgeschlagenen Routinen zusammenstellt. Die Anweisungssequenzen werden über das Datennetz an die mobile Vorrichtung geleitet.

Eine vorteilhafte Ausführungsform des Systems weist eine mobile Vorrichtung auf, die Programme ausführen kann, wobei die Programme standardmäßige Programme sind oder aktuell zum Service-Wartungszeitpunkt aus den aktuellen Daten des technischen Gerätes generiert werden. Zusätzlich ist es möglich, neue technische Dienstleistungen aus dem Datennetz erfindungsgemäß zu nutzen, da die Software der mobilen Vorrichtung einfach auf die mobile Vorrichtung ladbar und damit austauschbar ist. Das System ermöglicht folglich eine fortwährende Aktualisierung bzw. Verbesserung der anfallenden Wartungs- und Fehlerbehebungsarbeiten.

Es sind mehrere Ausführungsformen denkbar, die jeweils in Abhängigkeit der gegebenen Umstände vorteilhaft sind:

Eine erste Ausführungsform stellt eine mobile Vorrichtung dar, die als reine Datenschnittstelle (Gateway) verwendet wird. Die mobile Vorrichtung ist deshalb lediglich auf den Datenaustausch bzw. auf die Organisation des Datenaustauschs der beteiligten Parteien spezialisiert. Der Vorteil dieser Ausführungsform ist deren Einfachheit und die Tatsache, dass die mobile Vorrichtung an die Stelle von kompliziertem und technischem Gerät bzw. dem Experten vor Ort tritt.

Eine zweite Ausführungsform ist ein Gateway mit lokaler Kontrolle. Die zweite Ausführungsform hat alle Merkmale der ersten Ausführungsform, wobei Zugriffe von außen auf das technische Gerät durch den lokalen Bediener bzw. Servicetechniker kontrollierbar sind. Vorteilhafterweise kann die Freischaltung für den Remote-Zugriff auf explizite Weise erfolgen.

Eine dritte vorteilhafte Ausführungsform des Systems beinhaltet die serveradaptierte Führung des lokalen Bedieners bzw. Servicetechnikers. Mittels der Eigenschaften der mobilen Vorrichtung als Ablaufumgebung für ladbare Programme, sowie für die Interaktion mit diesen Programmen, übernimmt die mobile Vorrichtung die Fehlerbehebung bzw. Wartung durch die Verwendung einer intelligenten Serviceanleitung, die von einem Teilnehmer übermittelt worden ist. In diesem Zusammenhang ist die Aufrechterhaltung der Datenverbindung zwischen dem Teilnehmer und der mobilen Vorrichtung gegebenenfalls nicht mehr notwendig. Insbesondere wenn die intelligente Serviceanleitung alle Informationen und Anweisungen enthält, ist die Datenverbindung überflüssig und kann unterbrochen werden.

Eine Generierung einer intelligenten Serviceanleitung und deren Verwendung gemäß der dritten Ausführungsform könnte beispielsweise folgende Schritte beinhalten:

Die mobile Vorrichtung liest Daten des technischen Gerätes aus, wie z.B. Identifikationsdaten, Prozessdaten, oder Fehlermeldungsdaten. Diese Daten übermittelt die mobile Vorrichtung an einen zentralen Server. Der Server berechnet aus den übermittelten Daten eine spezifische intelligente Serviceanleitung, die für den Anwendungsfall, d.h. wenn beispielsweise ein ganz bestimmter Fehler aufgetreten ist, spezifisch generiert wird. Der Server entdeckt weiterhin, dass ein Software-Update neuerdings für das technische Gerät vorliegt. Der Server erkennt anhand der Prozessdaten des technischen Gerätes beispielsweise dass das Software-Update für diese Anwendung möglicherweise keine Vorteile bringt und konsultiert automatisch den Experten. Der Experte signalisiert dem Server über das Datennetz, dass das Software-Update doch sinnvoll ist. Nach Erhalt der Mitteilung überträgt der Server eine auf der Mitteilung und den Daten des technischen Gerätes basierende intelligente Serviceanleitung an die mobile Vorrichtung. Der Bediener nutzt die mobile Vorrichtung als Bediengerät und beseitigt mit Hilfe der individuellen intelligenten Serviceanleitung den Fehler, bzw. führt die Wartung des technischen Gerätes durch. Anschließend installiert die mobile Vorrichtung zusätzlich selbsttätig das Software-Update. Während der Abarbeitung der Serviceanleitung können von der mobilen Vorrichtung sowohl Zugriffe auf das technische Gerät als auch auf den zentralen Server erfolgen, um die Effizienz des Vorgangs zu erhöhen. Die intelligente Serviceanleitung kann ebenfalls lediglich das technische Gerät und/oder den Bediener betreffen, womit eine Datenverbindung zum Server nicht mehr notwendig ist und entweder das technische Gerät oder der Bediener selbsttätig agieren.

In einer vierten Ausführungsform ist die Verwendung eines propriäteren Protokolls zwischen der mobilen Vorrichtung und dem technischen Gerät, insbesondere einem Automatisierungsgerät denkbar. Somit stellt die mobile Vorrichtung den Endpunkt eines eventuellen Angriffs von außen, das heißt aus dem Datennetz heraus, dar. Folglich ist das technische Gerät dank des proprietären Protokolls zum Datennetz hin abgeschirmt. Dies bedeutet, dass während der temporären Anbindung im Bedarfsfalle ein weiterer Sicherheitsmechanismus zum Schutz des technischen Gerätes vorhanden ist.

Weitere vorteilhafte Ausbildungen und bevorzugte Weiterbildungen der Erfindung sind der Figurenbeschreibung und/oder den Unteransprüchen zu entnehmen.

Im Folgenden wird die Erfindung anhand der in der Figur dargestellten Ausführungsbeispiele näher beschrieben und erläutert. Es zeigt:

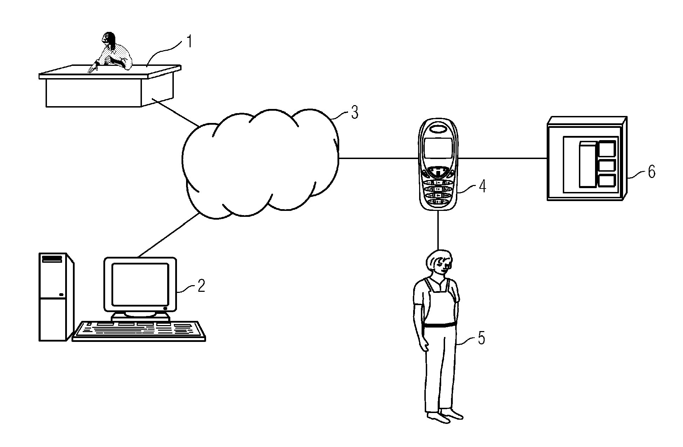

- FIG 1: ein System zur Fernanalyse, Fernwartung und/oder Fehlerbehebung eines technischen Gerätes.

FIG 1 zeigt ein System zur Fernanalyse, Fernwartung und/oder Fehlerbehebung eines technischen Gerätes 6, wobei der lokale Bediener 5 an der mobilen Vorrichtung 4, die hier als Mobiltelefon ausgeführt ist, einem Experten 1, den Zugriff auf das technische Gerät 6 ermöglicht. Durch die mobile Vorrichtung 4 ist dem Experten 1 per Fernsteuerung eine Ferndiagnose des technischen Gerätes möglich. Der Experte 1 kann dem Bediener 5 beispielsweise per Telefon (computergestützt oder akustisch) Anweisungen geben, die sich auf die Wartung oder Fehlerbehebung des technischen Gerätes 6 beziehen.

Des Weiteren ist ein Einsatz des Systems zur Übermittlung von Diagnosedaten denkbar. In komplexen Fehlerfällen ist der Bediener 5 vor Ort häufig überfordert und benötigt die Hilfe des Experten 1. Damit Experte 1 nicht nur auf die mündlichen Aussagen des Bedieners 5 vor Ort angewiesen ist, benötigt der Experte 1 Detailwissen über den aufgetretenen Fehler. Dieses Wissen ist im Allgemeinen im Diagnosepuffer des technischen Geräts vorhanden. Mittels der Datenverbindung über das Datennetz 3, z. B das Internet, und der mobilen Vorrichtung 4 können die Daten des Diagnosepuffers des technischen Gerätes 6 ausgelesen und an den Computer 2 übermittelt werden. Auf der Basis dieser Daten kann der Experte 1 einen entsprechenden Rat bzw. Anweisungen geben. Der Computer 2 ist hierbei als Server, d.h. als eine separate Anlaufstelle, oder als lokales Hilfsmittel des Experten 1 ausführbar.

Hinsichtlich eines Firmware-Updates ergeben sich ebenfalls Vorteile. Die mobile Vorrichtung 4 liest Daten bezüglich der Identifikation, des Firmware-Standes und weiteren Konfigurationsinformationen aus dem technischen Gerät 6 aus. Die mobile Vorrichtung 4 übermittelt diese Daten an den als Server ausgeführten Computer 2, der eine passende Firmware auswählt. Hierbei kann dieser basierend auf den übermittelten Daten optimal auswählen. Die mobile Vorrichtung 4 erhält die Firmware vom Computer 2, und installiert diese auf dem technischen Gerät 6. Optional ist eine zentrale Registrierung über den Firmware-Update möglich.

Bei bestimmten technischen Geräten sind so genannte kritische Bedienhandlungen notwendig. Für diese kritischen Bedienhandlungen ist es nach FDA (Food and Drug Administration) Richtlinien erforderlich, die relevanten kritischen Bedienungshandlungen nur dann zuzulassen, wenn Kontakt zu einem zentralen Dienst besteht. Neben einer zentralen Autorisierung ist folglich auch eine zentrale Überwachung bestimmter Bedienhandlungen sichergestellt. Ein solches FDA-Logging kann beispielsweise wie folgt ablaufen:

Die mobile Vorrichtung 4 liest Daten zur Identifikation und andere Daten (z.B. Verweis auf den Computer 2) aus dem technischen Gerät 6. Aufgrund der Daten weiß die mobile Vorrichtung 4, an welchen Internet-Server sie sich zu wenden hat, in diesem Beispiel an Computer 2. Die mobile Vorrichtung 4 lädt daraufhin Bediensoftware vom als Server ausgeführten Computer 2, die danach lokal ausgeführt wird. Alle Aktionen zur Wartung oder Fehlerbehebung seitens des Bedieners 5 oder der mobilen Vorrichtung 4 werden vom Computer 2 mit aufgezeichnet.

Zusammenfassend betrifft die Erfindung ein System und ein Verfahren zur Fernanalyse, Fernwartung und/oder Fehlerbehebung eines technischen Geräts, wobei das System eine mobile Vorrichtung aufweist, die im Bedarfsfall mit dem technischen Gerät und mit einem Datennetz verbindbar ist. Ein Computer und/oder ein Experte führen eine Fernanalyse durch und geben Anweisungssequenzen an die mobile Vorrichtung bzw. an das technische Gerät durch. Ziel ist es, eine sichere und kosteneffiziente Fernanalyse, Fernwartung und/oder Fehlerbehebung durchzuführen. Aus Gründen der Sicherheit wird die mobile Vorrichtung lediglich im Bedarfsfall temporär mit dem technischen Gerät verbunden, um über ein Datennetz mit dem Experten bzw. mit dem Computer zu kommunizieren. Durch den Computer und/oder den Experten wird mindestens eine auf der Fernanalyse basierende, zur Wartung und/oder Fehlerbehebung vorgesehene Anweisungssequenz für das technische Gerät über das Datennetz bereitgestellt.

## Patentansprüche

1. System zur Fernanalyse, Fernwartung und/oder Fehlerbehebung eines technischen Geräts (6), wobei das System eine mobile Vorrichtung (4) aufweist, die im Bedarfsfall mit dem technischen Gerät (6) und mit einem Datennetz (3) verbindbar ist, und Mittel zur Kommunikation zwischen dem technischen Gerät (6) und mindestens einem Teilnehmer (1,2) des Datennetzes (3) aufweist, wobei der Teilnehmer (1,2) Mittel zur Fernanalyse, Fernwartung und/oder Fehlerbehebung des technischen Gerätes (6) aufweist, **dadurch gekennzeichnet, dass** die mobile Vorrichtung (4) Mittel zur Kontrolle eines Zugriffs aus dem Datennetz (3) aufweist, und dass durch den Teilnehmer (1,2) mindestens eine, auf der Fernanalyse basierende, zur Wartung und/oder Fehlerbehebung vorgesehene Anweisungssequenz, für das technische Gerät (6) über das Datennetz (3) bereitstellbar ist.

2. System nach Anspruch 1, wobei der Teilnehmer (1,2) ein Computer (2), insbesondere ein Server, und/oder ein Experte (1) sind/ist.

3. System nach einem der Ansprüche 1 oder 2, wobei die Anweisungssequenz zur Anweisungsausführung durch den Bediener (5) des technischen Gerätes (6) und/oder als Algorithmus vorgesehen ist, wobei der Algorithmus zur Ausführung durch die mobile Vorrichtung (4) und/oder durch das technische Gerät (6) vorgesehen ist.

4. System nach einem der vorhergehenden Ansprüche, wobei die Kommunikation zwischen der mobilen Vorrichtung (4) und dem technischen Gerät (6) als drahtlose oder drahtgebundene Kommunikation vorgesehen ist.

5. System nach einem der vorhergehenden Ansprüche, wobei das Datennetz (3) ein öffentliches Netz, ein Intranet und/oder das Internet ist.

6. System nach einem der vorhergehenden Ansprüche, wobei das technische Gerät (6) ein fest installiertes Automatisierungsgerät ist.

7. System nach einem der vorhergehenden Ansprüche, wobei die Wartung und/oder Fehlerbehebung durch die Ausführung des Algorithmus durch die mobile Vorrichtung (4) vorgesehen ist.

8. System nach einem der vorhergehenden Ansprüche, wobei die Ausführung des Algorithmus selbsttätige Aktionen der mobilen Vorrichtung (4) umfasst.

9. System nach einem der vorhergehenden Ansprüche, wobei selbsttätige Aktionen mindestens eine Kommunikation zur Wartung und/oder Fehlerbehebung der mobilen Vorrichtung (4) mit dem Teilnehmer (1,2), mit dem Bediener des technischen Gerätes (6), und/oder dem technischen Gerät (6) aufweisen.

10. System nach einem der vorhergehenden Ansprüche, wobei die mobile Vorrichtung (4) und das technische Gerät (6) zur Verwendung eines proprietären Protokolls vorgesehen sind.

11. Verfahren zur Fernanalyse, Fernwartung und/oder Fehlerbehebung eines technischen Gerätes (6), wobei eine mobile Vorrichtung (4) im Bedarfsfall mit dem technischen Gerät (6) und mit einem Datennetz (3) verbunden wird, und die mobile Vorrichtung (4) eine Kommunikation zwischen dem technischen Gerät (6) und mindestens einem Teilnehmer (1,2) des Datennetzes ermöglicht, wobei der Teilnehmer eine Fernanalyse, Fernwartung und/oder Fehlerbehebung des technischen Gerätes (6) durchführt, **dadurch gekennzeichnet, dass** die mobile Vorrichtung (4) einen Zugriff aus dem Datennetz (3) kontrolliert, und dass durch den Teilnehmer (1,2) mindestens einer auf der Fernanalyse basierende, zur Wartung und/oder Fehlerbehebung vorgesehene Anweisungssequenz, für das technische Gerät (6) über das Datennetz (3) bereitgestellt wird.

12. Verfahren nach Anspruch 11, wobei der Teilnehmer (1, 2) ein Computer (2), insbesondere ein Server, und/oder ein Experte (1) sind/ist.

13. Verfahren nach einem der Ansprüche 11 oder 12, wobei der Bediener (5) mittels der Anweisungssequenz eine Anweisungsausführung des technischen Gerätes (6) durchführt und/oder die mobile Vorrichtung (4) die Anweisungssequenz, die als Algorithmus ausgeführt ist, ausführt.

14. Verfahren nach einem der Ansprüche 11 bis 13, wobei die Kommunikation zwischen der mobilen Vorrichtung und dem technischen Gerät (6) drahtlos oder drahtgebunden durchgeführt wird.

15. Verfahren nach einem der Ansprüche 11 bis 14, wobei das Datennetz (3) ein öffentliches Netz, ein Intranet und/oder das Internet ist.

16. Verfahren nach einem der Ansprüche 11 bis 15, wobei das technische Gerät (6) ein fest installiertes Automatisierungsgerät ist.

17. Verfahren nach einem der Ansprüche 11 bis 16, wobei die mobile Vorrichtung (4) die Wartung und/oder Fehlerbehebung mittels der Ausführung des Algorithmus durchführt.

18. Verfahren nach einem der Ansprüche 11 bis 17, wobei der Algorithmus mittels selbsttätiger Aktionen der mobilen Vorrichtung (4) ausgeführt wird.

19. Verfahren nach einem der Ansprüche 11 bis 18, wobei selbsttätige Aktionen der mobilen Vorrichtung (4) mindestens eine Kommunikation mit dem Teilnehmer (1,2) mit dem Bediener (5) des technischen Gerätes (6) und/oder dem technischen Gerät (6) zur Wartung und/oder Fehlerbehebung beinhaltet.

20. Verfahren nach einem der Ansprüche 11 bis 19, wobei die mobile Vorrichtung (4) und das technische Gerät (6) zur Kommunikation ein proprietäres Protokoll verwenden.
